# EUROPÄISCHE PATENTSCHRIFT

(11) **EP 2 242 662 B1**
(45) Veröffentlichungstag und Bekanntmachung des Hinweises auf die Patenterteilung: **24.08.2011**
(21) Anmeldenummer: 09712297.2
(22) Anmeldetag: 26.01.2009
(51) Int. Cl.: B60K 6/10, F16H 61/04

(54) **EINRICHTUNG ZUR REDUZIERUNG DES ZUGKRAFTEINBRUCHS**
DEVICE FOR REDUCING THE DROP IN TRACTIVE FORCE
DISPOSITIF POUR RÉDUIRE LA CHUTE DE LA FORCE DE TRACTION

(30) Priorität: 18.02.2008 DE 102008000327
(43) Veröffentlichungstag der Anmeldung: 27.10.2010
(73) Patentinhaber: ZF Friedrichshafen AG, 88038 Friedrichshafen (DE)
(72) Erfinder: DÖBELE, Bernd, 88682 Salem (DE); WIENCEK, Norbert, 88709 Hagnau (DE)
(86) Internationale Anmeldenummer: PCT/EP2009/050825
(87) Internationale Veröffentlichungsnummer: WO 2009/103591

(56) Entgegenhaltungen:
- EP-A- 0 952 023
- DE-A1- 2 552 906
- DE-A1- 3 245 045
- DE-A1- 10 230 612
- DE-A1-102004 002 283
- DE-A1-102004 033 039

## Beschreibung

Die vorliegende Erfindung bezieht sich auf eine Einrichtung zur Reduzierung des Zugkrafteinbruchs während der Gangwechselphase bei einem automatisierten Schaltgetriebe gemäß dem Oberbegriff des Patentanspruchs 1. Des weiteren bezieht sich die Erfindung auf ein Verfahren zum Betreiben der erfindungsgemäßen Einrichtung.

Ein automatisiertes Schaltgetriebe umfasst nach dem Stand der Technik eine elektromechanische Kupplungssteuerung und eine elektromechanische Getriebesteuerung sowie eine Steuerelektronik, welche mit der Steuerelektronik des Verbrennungsmotors des Fahrzeugs über in der Regel einen CAN-Bus in Verbindung steht.

Schaltsysteme von automatisierten Schaltgetrieben weisen konventionelle, z.T. auch manuell betätigbare Schaltelemente auf, umfassend eine zwischen dem Antriebsmotor und dem Getriebe angeordnete Anfahrkupplung und Schaltelemente zum Wählen und Schalten der einzelnen Gänge, wobei die Betätigung der Schaltelemente über entsprechende in der Regel als hydraulisch oder pneumatisch betätigbare Kolben-Zylinder-Anordnungen oder als elektrische Aktuatoren ausgebildete Betätigungselemente erfolgt. Ein automatisiertes Schaltgetriebe ist beispielsweise in der DE 102 30 612 A1 beschrieben.

Bei derartigen Getrieben führt die erforderliche Unterbrechung der Zugkraft bzw. die Trennung des Kraftflusses zwischen Motor und Getriebe zum Wechsel der Gangstufe als Folge der aussetzenden Beschleunigung vermehrt zum Wunsch nach einer Reduzierung des Zugkrafteinbruchs während der Gangwechselphase.

Aus der gattungsbildenden DE 10 2004 002 283 A1 der Anmelderin ist eine Antriebsvorrichtung mit einem Schaltgetriebe, einer Antriebsmaschine und einer Schaltkupplung bekannt, bei der zur Reduzierung der Phase der Zugkraftunterbrechung bei einem Schaltvorgang der Antriebsvorrichtung eine Schaltbremskupplung zwischen Antriebsmaschine und Trennkupplung zugeordnet ist, derart, dass bei einem Schaltvorgang sich überschneidende Öffnungs- bzw. Schließvorgänge der Schaltbremskupplung und der Trennkupplung zu einer Abstützung des Antriebsmaschinendrehmomentes auf einem Getriebeabtrieb führen. Dadurch soll die Zeitspanne der Zugkraftunterbrechung minimiert und der Zugkrafteinbruch reduziert werden.

Der vorliegenden Erfindung liegt die Aufgabe zugrunde, eine Einrichtung zur Reduzierung des Zugkrafteinbruchs während der Gangwechselphase bei einem automatisierten Schaltgetriebe anzugeben. Zudem soll ein Verfahren zum Betreiben der erfindungsgemäßen Einrichtung angegeben werden.

Diese Aufgabe wird für eine Einrichtung zur Reduzierung des Zugkrafteinbruchs durch die Merkmale des Patentanspruchs 1 gelöst. Ein Verfahren zum Betreiben der Einrichtung zur Reduzierung des Zugkrafteinbruchs ist Gegenstand des Patentanspruchs 4. Weitere erfindungsgemäße Ausgestaltungen und Vorteile gehen aus den entsprechenden Unteransprüchen hervor.

Demnach wird als eine Einrichtung zur Reduzierung des Zugkrafteinbruchs während der Gangwechselphase bei einem automatisierten Schaltgetriebe, umfassend eine automatisiert betätigte Fahrkupplung, eine Einrichtung vorgeschlagen, welche einen Rotationsspeicher bzw. Schwungradspeicher aufweist, der über zwei Übersetzungsstufen, denen jeweils eine Reibungskupplung zugeordnet ist, mit der Abtriebswelle bzw. im Fall eines Getriebes mit nachgeschalteter Bereichsgruppe bedarfsweise mit der Abtriebswelle des Grundgetriebes reibschlüssig koppelbar ist, wobei zu jedem Zeitpunkt jeweils eine der beiden Reibungskupplungen schaltbar ist.

Gemäß der Erfindung ist mit einer der Übersetzungsstufen eine Übersetzung größer als 1 erzielbar (Übersetzung ins Schnelle), mit der anderen Übersetzungsstufe ist eine Übersetzung erzielbar, die kleiner als 1 ist.

Hierbei ist vorgesehen, dass bei Situationen außerhalb einer Schaltphase zum Laden des Rotationsspeichers die Reibungskupplung schaltbar ist, durch die eine Verbindung zwischen der Abtriebswelle und dem Rotationsspeicher mittels der ins Schnelle übersetzenden Übersetzungsstufe erzielt wird, wodurch das Drehzahlniveau der Rotationsmasse um einen vorgegebenen Faktor über das Niveau der Abtriebsdrehzahl gehoben wird.

Derartige Situationen sind vorzugsweise Situationen, bei denen das Fahrzeug beschleunigt oder abgebremst wird oder Situationen, bei denen eine Schaltung zu erwarten ist. Insbesondere in Bremssituationen wirkt der Energieentzug zur Beschleunigung der Rotationsmasse unterstützend.

Bei einer Gangwechselphase, d.h. bei einem Gangwechsel im Getriebe und/oder in einer vorhandenen Vorschaltgruppe, wird die ins Schnelle treibende Übersetzungsstufe zwischen der Abtriebswelle bzw. der Abtriebswelle des Grundgetriebes und dem Rotationsspeicher, falls die dieser Übersetzungsstufe zugeordnete Kupplung geschlossen ist, durch Öffnen der dieser Übersetzungsstufe zugeordneten Kupplung deaktiviert, wobei die der ins Langsame übersetzenden Übersetzungsstufe zugeordnete Kupplung, vorzugsweise wenn das Moment der Fahrkupplung einen vorgegebenen Schwellenwert unterschreitet, überschneidend zum Moment der Fahrkupplung geschlossen wird.

Auf diese Weise wird erreicht, dass bis zum Eintritt der Gleichheit von drehzahlbezogenem und mechanischem Übersetzungsverhältnis zwischen der Abtriebsdrehzahl und der Drehzahl des Rotationsspeichers die Energie des Rotationsspeichers auf die Abtriebswelle bzw. auf die Abtriebswelle des Grundgetriebes übertragen wird, wodurch der Zugkrafteinbruch während der Gangwechselphase in vorteilhafter Weise reduziert wird.

Nach der Durchführung des Gangwechsels wird das Motormoment proportional zum überschneidenden Anstieg des Moments der Fahrkupplung erhöht. Wenn das von der Fahrkupplung übertragene Moment einen vorgegebenen Schwellenwert überschreitet, wird die der ins Langsame übersetzenden Übersetzungsstufe zugeordnete Kupplung geöffnet und die der ins Schnelle übersetzenden Übersetzungsstufe zugeordnete Kupplung ist wieder schaltbar.

In vorteilhafter Weise erfolgt die Steuerung der Einrichtung zur Reduzierung des Zugkrafteinbruchs während der Gangwechselphase über die bereits vorhandene elektronische Steuerung (ECU) des automatisierten Schaltgetriebes.

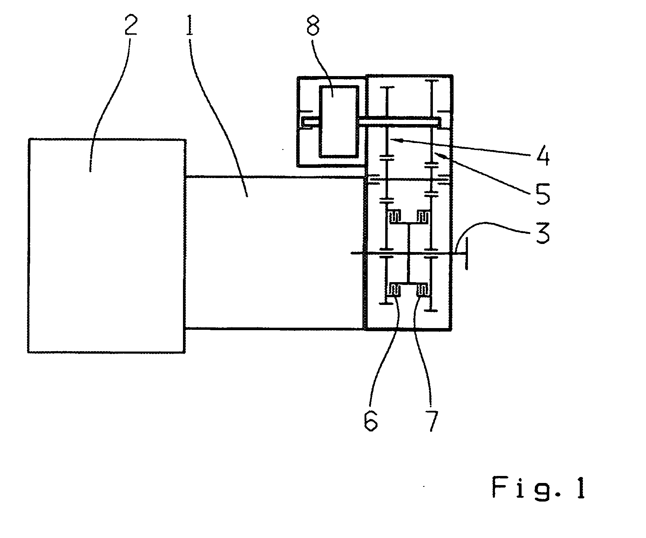

Die Erfindung wird im folgenden anhand der beigefügten Figur, welche eine schematische Schnittansicht eines eine gemäß der Erfindung ausgeführte Einrichtung zur Reduzierung des Zugkrafteinbruchs während der Gangwechselphase aufweisenden Antriebsstrangs mit einem automatisierten Schaltgetriebe ist, beispielhaft näher erläutert.

In der Figur ist ein automatisiertes Schaltgetriebe 1 dargestellt, welches antriebsseitig mit einem Verbrennungsmotor 2 verbunden ist. Des weiteren ist ein Rotationsspeicher 8 vorgesehen, der über zwei Übersetzungsstufen 4, 5, denen jeweils eine Reibungskupplung 6, 7 zugeordnet ist, mit der Abtriebswelle 3 des Getriebes 1 reibschlüssig koppelbar ist; zu jedem Zeitpunkt ist erfindungsgemäß jeweils eine der beiden Reibungskupplungen 6, 7 schaltbar. Der Rotationsspeicher 8 kann beispielsweise derart dimensioniert sein, dass eine Momentabgabe von 1000Nm über einen Zeitraum von einer Sekunde möglich ist.

Vorzugsweise sind die beiden Reibungskupplungen 6, 7 zu einer lastschaltbaren Doppelkupplung baulich vereinigt, wie in der Figur dargestellt.

Mit einer der Übersetzungsstufen 5 ist eine Übersetzung ins Schnelle erzielbar, d.h. die Übersetzung ist größer als 1; diese Übersetzungsstufe wird zum Laden des Rotationsspeichers 8 geschaltet. Die andere Übersetzungsstufe 4, mit der eine Übersetzung ins Langsame erzielbar ist, wird zur Energieabgabe vom Rotationsspeicher 8 auf die Abtriebswelle 3 verwendet. Beispielsweise kann die Übersetzung der Übersetzungsstufe 4 0,8 betragen; ein beispielhafter Wert für die mittels der Übersetzungsstufe 5 erzielbaren Übersetzung ist 1,25.

Erfindungsgemäß wird der Rotationsspeicher 8 bei Situationen außerhalb einer Gangwechselphase durch Schließen der der ins Schnelle übersetzenden Übersetzungsstufe 5 zugeordneten Reibungskupplung 7 geladen, wobei auf diese Weise das Drehzahlniveau der Rotationsmasse des Rotationsspeichers 8 um einen vorgegebenen Faktor entsprechend der erzielbaren Übersetzung über das Niveau der Abtriebsdrehzahl gehoben wird.

Bei einer Gangwechselphase wird die ins Schnelle übersetzende Übersetzungsstufe 5 zwischen der Abtriebswelle 3 bzw. der Abtriebswelle des Grundgetriebes 1 und dem Rotationsspeicher 8, falls die dieser Übersetzungsstufe 5 zugeordnete Kupplung 7 geschlossen ist, durch Öffnen der dieser Übersetzungsstufe 5 zugeordneten Kupplung 7 deaktiviert. Ferner wird die der ins Langsame übersetzenden Übersetzungsstufe 4 zugeordnete Kupplung 6 überschneidend zum Moment der Fahrkupplung geschlossen. Auf diese Weise wird die Energie des Rotationsspeichers auf die Abtriebswelle bzw. auf die Abtriebswelle des Grundgetriebes 1 übertragen, wodurch der Zugkrafteinbruch während der Gangwechselphase vermieden bzw. reduziert wird.

Das Schließen der der ins Langsame übersetzenden Übersetzungsstufe 4 zugeordneten Kupplung 6 erfolgt vorzugsweise dann, wenn das Moment der Fahrkupplung des automatisierten Schaltgetriebes 1 einen vorgegebenen Schwellenwert unterschreitet.

Nach der Durchführung des Gangwechsels wird das Motormoment proportional zum überschneidenden Anstieg des Moments an der Fahrkupplung erhöht. Wenn das von der Fahrkupplung übertragene Moment einen vorgegebenen Schwellenwert überschreitet, wird erfindungsgemäß die der ins Langsame übersetzenden Übersetzungsstufe 4 zugeordnete Kupplung 6 geöffnet und die die der ins Schnelle übersetzenden Übersetzungsstufe 5 zugeordnete Kupplung 7 ist wieder schaltbar.

### Bezugszeichen

- 1: automatisiertes Schaltgetriebe
- 2: Verbrennungsmotor
- 3: Abtriebswelle
- 4: Übersetzungsstufe
- 5: Übersetzungsstufe
- 6: Reibungskupplung
- 7: Reibungskupplung
- 8: Rotationsspeicher

## Patentansprüche

1. Einrichtung zur Reduzierung des Zugkrafteinbruchs während der Gangwechselphase bei einem automatisierten Schaltgetriebe (1) umfassend eine automatisiert betätigte Fahrkupplung, **dadurch gekennzeichnet, dass** die Einrichtung einen Rotationsspeicher (8) umfasst, welcher über zwei Übersetzungsstufen (4, 5), denen jeweils eine Reibungskupplung (6, 7) zugeordnet ist, mit der Abtriebswelle (3) des Getriebes (1) bzw. im Fall eines Getriebes mit nachgeschalteter Bereichsgruppe bedarfsweise mit der Abtriebswelle des Grundgetriebes reibschlüssig koppelbar ist, wobei zu jedem Zeitpunkt jeweils eine der beiden Reibungskupplungen (6, 7) schaltbar ist und wobei mit einer der Übersetzungsstufen (5) bei Situationen außerhalb einer Gangwechselphase eine Übersetzung ins Schnelle, wodurch das Drehzahlniveau einer Rotationsmasse des Rotationsspeichers (8) um einen vorgegebenen Faktor über das Niveau der Abtriebsdrehzal gehoben wird, und ein Laden des Rotationsspeichers ererzielt wird, während mit der anderen Übersetzungsstufe (4) während einer Gangwechselphase eine Übersetzung ins Langsame und eine Energieabgabe vom Rotationsspeicher (8) auf die Abtriebswelle (3) erzielt wird.

2. Einrichtung zur Reduzierung des Zugkrafteinbruchs, nach Anspruch 1, **dadurch gekennzeichnet, dass** die beiden Reibungskupplungen (6, 7) zu einer lastschaltbaren Doppelkupplung baulich vereinigt sind.

3. Einrichtung zur Reduzierung des Zugkrafteinbruchs, nach Anspruch 1 oder 2, **dadurch gekennzeichnet, dass** die Steuerung der Einrichtung zur Reduzierung des Zugkrafteinbruchs über die bereits vorhandene elektronische Steuerung (ECU) des automatisierten Schaltgetriebes (1) erfolgt.

4. Verfahren zum Betreiben der Einrichtung zur Reduzierung des Zugkrafteinbruchs während der Gangwechselphase bei einem automatisierten Schaltgetriebe (1), nach einem der Ansprüche 1, 2 oder 3, **dadurch gekennzeichnet, dass** der Rotationsspeicher (8) bei Situationen außerhalb einer Gangwechselphase durch Schließen der der ins Schnelle übersetzenden Übersetzungsstufe (5) zugeordneten Reibungskupplung (7) geladen wird, wobei auf diese Weise das Drehzahlniveau der Rotationsmasse des Rotationsspeichers (8) um einen vorgegebenen Faktor entsprechend der erzielbaren Übersetzung über das Niveau der Abtriebsdrehzahl gehoben wird und wobei bei einer Gangwechselphase die ins Schnelle übersetzende Übersetzungsstufe (5) zwischen der Abtriebswelle (3) bzw. der Abtriebswelle des Grundgetriebes und dem Rotationsspeicher (8), falls die dieser Übersetzungsstufe (5) zugeordnete Kupplung (7) geschlossen ist, durch Öffnen der dieser Übersetzungsstufe (5) zugeordneten Kupplung (7) deaktiviert wird und die der ins Langsame übersetzenden Übersetzungsstufe (4) zugeordnete Kupplung (6) überschneidend zum Moment der Fahrkupplung geschlossen wird, so dass die Energie des Rotationsspeichers (8) auf die Abtriebswelle (3) bzw. auf die Abtriebswelle des Grundgetriebes übertragen wird, wodurch der Zugkrafteinbruch während der Gangwechselphase vermieden bzw. reduziert wird.

5. Verfahren zum Betreiben der Einrichtung zur Reduzierung des Zugkrafteinbruchs während der Gangwechselphase bei einem automatisierten Schaltgetriebe (1), nach Anspruch 4, **dadurch gekennzeichnet, dass** das Schließen der der ins Langsame übersetzenden Übersetzungsstufe (4) zugeordneten Kupplung (6) dann erfolgt, wenn das Moment der Fahrkupplung des automatisierten Schaltgetriebes (1) einen vorgegebenen Schwellenwert unterschreitet.

6. Verfahren zum Betreiben der Einrichtung zur Reduzierung des Zugkrafteinbruchs während der Gangwechselphase bei einem automatisierten Schaltgetriebe (1), nach Anspruch 4 oder 5, **dadurch gekennzeichnet, dass**, wenn nach der Gangwechselphase das von der Fahrkupplung übertragene Moment einen vorgegebenen Schwellenwert überschreitet, die der ins Langsame übersetzenden Übersetzungsstufe (4) zugeordnete Kupplung (6) geöffnet wird.

7. Verfahren zum Betreiben der Einrichtung zur Reduzierung des Zugkrafteinbruchs während der Gangwechselphase bei einem automatisierten Schaltgetriebe (1), nach Anspruch 4, 5 oder 6, **dadurch gekennzeichnet, dass** der Rotationsspeicher (8) außerhalb einer Gangwechselphase bei Situationen geladen wird, bei denen das Fahrzeug beschleunigt oder abgebremst wird oder bei denen eine Schaltung zu erwarten ist.

## Claims

1. Device for reducing the drop in tractive force during the gearshift phase in an automatic shift gearbox (1), comprising an automatically actuated drive clutch, **characterized in that** the device comprises a rotary accumulator (8) which can be coupled in a frictionally engaging manner via two transmission ratio stages (4, 5), to which is assigned in each case one friction clutch (6, 7), to the drive output shaft (3) of the gearbox (1) or, in the case of a gearbox with downstream range group, if required to the drive output shaft of the basic gearbox, wherein in each case one of the two friction clutches (6, 7) can be engaged at all times and wherein, by means of one of the transmission ratio stages (5), in situations outside a gearshift phase, a step-up transmission ratio is obtained, as a result of which the rotational speed level of a rotary mass of the rotary accumulator (8) is increased above the level of the drive output rotational speed by a predefined factor and charging of the rotary accumulator takes place, whereas by means of the other transmission ratio stage (4), during a gearshift phase, a step-down transmission ratio is obtained and an output of energy from the rotary accumulator (8) to the drive output shaft (3) takes place.

2. Device for reducing the drop in tractive force, according to Claim 1, **characterized in that** the two friction clutches (6, 7) are structurally combined to form a double clutch that can be shifted under load.

3. Device for reducing the drop in tractive force, according to Claim 1 or 2, **characterized in that** the device for reducing the drop in tractive force is controlled by means of the already-existing electronic controller (ECU) of the automatic shift gearbox (1).

4. Method for operating the device for reducing the drop in tractive force during the gearshift phase in an automatic shift gearbox (1), according to one of Claims 1, 2 or 3, **characterized in that** the rotary accumulator (8), in situations outside a gearshift phase, is charged by virtue of the friction clutch (7) assigned to the stepping-up transmission ratio stage (5) being closed, wherein in this way the rotational speed level of the rotary mass of the rotary accumulator (8) is increased above the level of the drive output rotational speed by a predefined factor corresponding to the attainable transmission ratio, and wherein during a gearshift phase, the stepping-up transmission ratio stage (5) between the drive output shaft (3) or the drive output shaft of the basic gearbox and the rotary accumulator (8) is deactivated, if the clutch (7) assigned to said transmission ratio stage (5) is closed, by opening the clutch (7) assigned to said transmission ratio stage (5), and the clutch (6) assigned to the stepping-down transmission ratio stage (4) is closed in an overlapping manner with regard to the torque of the drive clutch, such that the energy of the rotary accumulator (8) is transmitted to the drive output shaft (3) or to the drive output shaft of the basic gearbox, as a result of which the drop in tractive force during the gearshift phase is prevented or reduced.

5. Method for operating the device for reducing the drop in tractive force during the gearshift phase in an automatic shift gearbox (1), according to Claim 4, **characterized in that** the closing of the clutch (6) assigned to the stepping-down transmission ratio stage (4) takes place when the torque of the drive clutch of the automatic shift gearbox (1) falls below a predefined threshold value.

6. Method for operating the device for reducing the drop in tractive force during the gearshift phase in an automatic shift gearbox (1), according to Claim 4 or 5, **characterized in that** when, after the gearshift phase, the torque transmitted by the drive clutch overshoots a predefined threshold value, the clutch (6) assigned to the stepping-down transmission ratio stage (4) is opened.

7. Method for operating the device for reducing the drop in tractive force during the gearshift phase in an automatic shift gearbox (1), according to Claim 4, 5 or 6, **characterized in that** the rotary accumulator (8) is charged outside a gearshift phase in situations in which the vehicle is being accelerated or braked or in which a shift is to be expected.

## Revendications

1. Dispositif pour réduire la chute de la force de traction pendant la phase de changement de rapport dans une boîte de vitesse à transmission automatisée (1), comprenant un embrayage de conduite à commande automatisée, **caractérisé en ce que** le dispositif comprend un accumulateur rotatif (8) qui peut être accouplé par engagement par friction, par le biais de deux étages de transmission (4, 5) auxquels est associé à chaque fois un embrayage à friction (6, 7), à l'arbre de sortie (3) de la boîte de vitesse (1), ou, dans le cas d'une boîte de vitesse à groupe relais monté en aval, au besoin à l'arbre de sortie de la boîte de vitesse de base, à chaque fois l'un des deux embrayages à friction (6, 7) pouvant être commuté à chaque instant, et dans des situations en dehors d'une phase de changement de rapport, une multiplication de vitesse étant obtenue avec l'un des étages de transmission (5), de sorte que le niveau de la vitesse de rotation d'une masse rotative de l'accumulateur rotatif (8) soit augmenté d'un facteur prédéfini au-dessus du niveau de la vitesse de rotation de sortie, et un chargement de l'accumulateur rotatif étant obtenu, tandis qu'avec l'autre étage de transmission (4), pendant une phase de changement de rapport, une démultiplication de vitesse et une distribution d'énergie par l'accumulateur rotatif (8) à l'arbre de sortie (3) soient obtenues.

2. Dispositif pour réduire la chute de la force de traction selon la revendication 1, **caractérisé en ce que** les deux embrayages à friction (6, 7) sont assemblés physiquement pour donner un double embrayage à commutation de charge.

3. Dispositif pour réduire la chute de la force de traction selon la revendication 1 ou 2, **caractérisé en ce que** la commande du dispositif pour réduire la chute de la force de traction a lieu par le biais de la commande électrique déjà existante (ECU) de la boîte de vitesse à transmission automatisée (1).

4. Procédé pour faire fonctionner le dispositif pour réduire la chute de la force de traction pendant la phase de changement de rapport dans une boîte de vitesse à transmission automatisée (1), selon l'une quelconque des revendications précédentes 1, 2 ou 3, **caractérisé en ce que** l'accumulateur rotatif (8), dans des situations en dehors d'une phase de changement de rapport, est chargé par fermeture de l'embrayage à friction (7) associé à l'étage de transmission (5) effectuant une multiplication de vitesse, le niveau de la vitesse de rotation de la masse rotative de l'accumulateur rotatif (8) étant ainsi augmenté d'un facteur prédéfini correspondant à la multiplication réalisable au-dessus du niveau de la vitesse de rotation de sortie, et dans le cas d'une phase de changement de rapport, l'étage de transmission (5) effectuant une multiplication de vitesse entre l'arbre de sortie (3) ou l'arbre de sortie de la boîte de vitesse de base et l'accumulateur rotatif (8), au cas ou l'embrayage (7) associé à cet étage de transmission (5) est fermé, étant désactivé par l'ouverture de l'embrayage (7) associé à cet étage de transmission (5), et l'embrayage (6) associé à l'étage de transmission (4) effectuant une démultiplication de vitesse étant fermé en coïncidant avec le couple de l'embrayage de conduite, de sorte que l'énergie de l'accumulateur rotatif (8) soit transmise à l'arbre de sortie (3) ou à l'arbre de sortie de la boîte de vitesse de base, de sorte que la chute de la force de traction pendant la phase de changement de rapport soit évitée ou réduite.

5. Procédé pour faire fonctionner le dispositif pour réduire la chute de la force de traction pendant la phase de changement de rapport dans une boîte de vitesse à transmission automatisée (1) selon la revendication 4, **caractérisé en ce que** la fermeture de l'embrayage (6) associé à l'étage de transmission (4) effectuant une démultiplication de vitesse a lieu lorsque le couple de l'embrayage de conduite de la boîte de vitesse à transmission automatisée (1) est en dessous d'une valeur seuil prédéfinie.

6. Procédé pour faire fonctionner le dispositif pour réduire la chute de la force de traction pendant la phase de changement de rapport dans une boîte de vitesse à transmission automatisée (1) selon la revendication 4 ou 5, **caractérisé en ce que** lorsque, après la phase de changement de rapport, le couple transmis par l'embrayage de conduite dépasse une valeur seuil prédéfinie, l'embrayage (6) associé à l'étage de transmission (4) effectuant une démultiplication de vitesse est ouvert.

7. Procédé pour faire fonctionner le dispositif pour réduire la chute de la force de traction pendant la phase de changement de rapport dans une boîte de vitesse à transmission automatisée (1) selon la revendication 4, 5 ou 6, **caractérisé en ce que** l'accumulateur rotatif (8), en dehors d'une phase de changement de rapport, est chargé dans des situations dans lesquelles le véhicule est accéléré ou freiné ou dans lesquelles on s'attend à une commutation.
